# EUROPÄISCHE PATENTSCHRIFT

(11) **EP 1 656 233 B1**
(45) Veröffentlichungstag und Bekanntmachung des Hinweises auf die Patenterteilung: **03.04.2013**
(21) Anmeldenummer: 04762547.0
(22) Anmeldetag: 29.07.2004
(51) Int. Cl.: B23K 26/34, B23P 6/00

(54) **VERFAHREN ZUR HERSTELLUNG UND/ODER REPARATUR VON BAUTEILEN FÜR GASTURBINEN**
METHOD FOR THE PRODUCTION AND/OR REPAIR OF STRUCTURAL COMPONENTS FOR GAS TURBINES
PROCEDE POUR REALISER ET/OU REPARER DES PIECES DE TURBINES A GAZ

(30) Priorität: 18.08.2003 DE 10337866
(43) Veröffentlichungstag der Anmeldung: 17.05.2006
(73) Patentinhaber: MTU Aero Engines GmbH, 80995 München (DE)
(72) Erfinder: STEINHARDT, Erich, 81377 München (DE)
(86) Internationale Anmeldenummer: PCT/DE2004/001702
(87) Internationale Veröffentlichungsnummer: WO 2005/016588

(56) Entgegenhaltungen:
- DE-A- 19 903 436
- DE-C- 19 547 903
- US-A- 5 233 150
- PATENT ABSTRACTS OF JAPAN Bd. 1999, Nr. 02, 26. Februar 1999 (1999-02-26) & JP 10 296470 A (NISSAN MOTOR CO LTD), 10. November 1998 (1998-11-10)

## Beschreibung

Die Erfindung betrifft ein Verfahren zur Herstellung und/oder Reparatur von Bauteilen für Gasturbinen, insbesondere für Flugtriebwerke gemäß dem Oberbegriff des Anspruchs 1. DE 199 034 36 A1 offenbart ein solches Verfahren.

Moderne Gasturbinen, insbesondere Flugtriebwerke, müssen höchsten Ansprüchen im Hinblick auf Zuverlässigkeit, Gewicht, Leistung, Wirtschaftlichkeit und Lebensdauer gerecht werden. In den letzten Jahrzehnten wurden insbesondere auf dem zivilen Sektor Flugtriebwerke entwickelt, die den obigen Anforderungen voll gerecht werden und ein hohes Maß an technischer Perfektion erreicht haben. Bei der Herstellung und auch Reparatur von Flugtriebwerken spielt unter anderem die Werkstoffauswahl, die Suche nach neuen, geeigneten Werkstoffen sowie die Suche nach neuen Fertigungsverfahren und Reparaturverfahren eine entscheidende Rolle.

Aus dem Stand der Technik sind zahlreiche Verfahren zur Herstellung sowie Reparatur von Bauteilen für Gasturbinen bekannt. Hierzu zählen unter anderem das Schmieden und Feingießen. So werden nach dem Stand der Technik alle hochbeanspruchten Bauteile im Verdichterbereich einer Gasturbine durch Schmieden hergestellt, wohingegen zum Beispiel die Laufschaufeln sowie Leitschaufeln der Turbine Feingussteile sind. Bei der Herstellung von Gasturbinenrotoren mit integraler Beschaufelung, von sogenannten Blisks (Bladed Disks) oder Blings (Bladed Rings) kommt insbesondere das Fräsen aus dem Vollen oder das Anfügen von fertigen Schaufelblättern an einen Rotorträger bzw. eine Nabe durch lineares Reibschweißen zum Einsatz.

Ein weiteres aus dem Stand der Technik bekanntes Verfahren zur Herstellung sowie Reparatur bzw. Instandsetzung von Schaufeln für Gasturbinen ist das sogenannte Laser-Pulver-Auftragschweißen, welches auch als Laserstrahlauftragschweißen oder Laserstrahlgenerieren bezeichnet wird. Nach dem Stand der Technik findet das Laser-Pulver-Auftragschweißen insbesondere bei Wartungsarbeiten und Instandsetzungsarbeiten Verwendung. So ist es aus dem Stand der Technik bekannt, Schaufeln, die infolge eines Verschleißes eine zu geringe Schaufelblattlänge aufweisen, durch Laser-Pulver-Auftragschweißen instandzusetzen, damit die Schaufeln häufiger zum Wiedereinsatz kommen können und demnach nicht vorzeitig aussortiert werden müssen.

Aus der DE 195 47 903 C 1 ist ein Verfahren zur Herstellung oder Instandsetzung von Schaufeln für Turbomaschinen mittels Laserstrahlauftragschweißen bekannt. Bei dem dort offenbarten Verfahren wird ein Blechstreifen als Stützform verwendet. Nach der Verlängerung der Schaufel durch Laserauftragschweißen wird der Blech- , streifen entfernt und wiederverwendet.

Das Dokument DE 199 03 436 A1 betrifft ein Verfahren zur Herstellung dreidimensionaler Formkörper durch Laserstrahl-Präsisions-Auftragschweißen oder selektives Läsersintern. Dabei wird ein hohler Hüllkörper schichtweise aufgebaut und zumindest teilweise mit einem zweiten Material befüllt, welches beispielsweise leichter sein kann. Nach Anspruch 15 dieses Dokuments ist es auch möglich, den Hüllkörper um einen Stützkörper herum aufzubauen. Anspruch 30 dieses Dokuments nennt als Beispiel die Herstellung von Turbinenschaufeln.

Das Dokument JP10 296 470 A, PATENT ABSTRACTS OF JAPAN, Bd. 1999, Nr. 02, beschreibt das Beschichten einer Kolbenringnut in einem Verbrennungsmotorkolben aus Leichtmetall mit Kupfer durch Laser-Pulver-Auftragschweißen, wodurch die Verschieißfestigkeit der Nut erhöht wird.

Hiervon ausgehend liegt der vorliegenden Erfindung das Problem zu Grunde, ein neuartiges Verfahren zur Herstellung und/oder Reparatur von Bauteilen für Gasturbinen vorzuschlagen.

Dieses Problem wird dadurch gelöst, dass das eingangs genannte Verfahren durch die Merkmale des kennzeichnenden Teils des Patentanspruchs 1 weitergebildet ist.

Erfindungsgemäß erfolgt das Laser-Pulver-Auftragschweißen unter Verwendung mindestens eines Grundkörpers aus gegossenem, geschmiedetem oder pulvermetallurgisch hergestelltem Material, wobei während des Laser-Pulver-Auftragschweißens der Materialaufbau durch ein Pulvermaterial derart erfolgt, dass der oder jeder Grundkörper vom aufgeschweißten Pulvermaterial zumindest abschnittsweise umschlossen wird. Der beim erfindungsgemäßen Verfahren verwendete Grundkörper verbleibt nach dem Laser-Pulver-Auftragschweißen im hergestellten bzw. reparierten Bauteil und wird dadurch Bestandteil desselben. Hierdurch ergeben sich eine Vielzahl neuer Gestaltungsmöglichkeiten für Gasturbinenbauteile in Form von Schaufelsegmenten oder Rotoren mit integraler Beschaufelung für Flugtriebwerke.

Der mindestens eine Grundkörper ist dabei als Innendeckband und/oder als Außendeckband ausgebildet.

Bevorzugte Weiterbildungen des erfindungsgemäßen Verfahrens ergeben sich aus den abhängigen Unteransprüchen und der nachfolgenden Beschreibung.

Ausführungsbeispiele der Erfindung werden, ohne hierauf beschränkt zu sein, an Hand der Zeichnung näher erläutert. In der Zeichnung zeigt:

Nachfolgend wird unter Bezugnahme auf Fg. 1 die Erfindung in größerem Detail beschrieben. Fig. 2 zeigt ein Schaufelsegment.

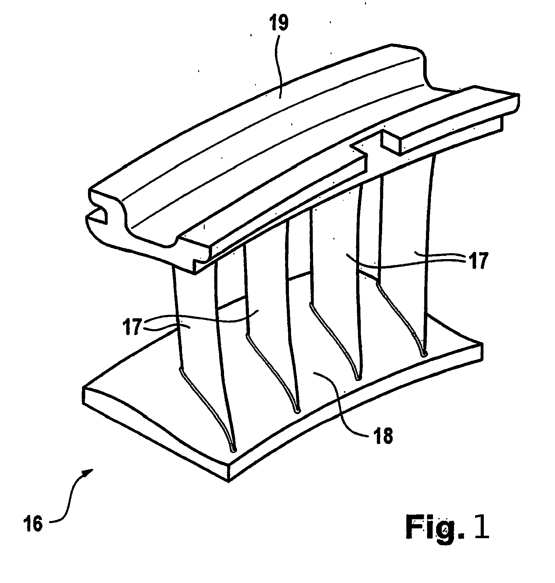

Fig. 1 zeigt ein mithilfe des erfindungsgemäßen Verfahrens hergestelltes Schaufelsegment 16 mit insgesamt vier Schaufeln 17, einem Innendeckband 18 sowie einem Außendeckband 19. So kann es sich bei dem Schaufelsegment 16 gemäß Fig. 2 zum Beispiel um ein Schaufelsegment handeln, dessen einzelne Schaufeln 17 analog zu der Schaufel 10 gemäß Fig. 1 als Hohlschaufeln mit in die Hohlräume derselben eingelagerten Kernen ausgebildet sind.

In Abweichung hierzu ist es jedoch auch möglich, das Schaufelsegment 16 gemäß Fig. 1 dadurch herzustellen, dass sowohl für das Innendeckband 18 sowie das Außendeckband 19 jeweils ein gegossener, geschmiedeter oder pulvermetallurgisch hergestellter Grundkörper verwendet wird, wobei die einzelnen Schaufeln 17 an diesen Grundkörpern durch Laser-Pulver-Auftragschweißen aufgebaut werden.

Aus den im Zusammenhang mit Fig. 1 beschriebenen Details des erfindungsgemäßen Verfahrens folgt unmittelbar, dass mithilfe des erfindungsgemäßen Verfahrens eine Vielzahl von Gestaltungsmöglichkeiten für Gasturbinenbauteile eröffnet werden. So lassen sich mithilfe des erfindungsgemäßen Verfahrens um einen Kern aus dämpfendem Material durch Laser-Pulver-Auftragschweißen Hohlschaufeln herstellen. Des weiteren ist es möglich, durch Einbettung gegossener, geschmiedeter oder pulvermetallurgisch hergestellter Grundkörper in das Pulvermaterial bzw. Laserpulver Schaufeln, Schaufelsegmente oder Gasturbinenrotoren mit integraler Beschaufelung mit und ohne Deckband herzustellen. Weiterhin ist es möglich, Bauteile aus unterschiedlichen Materialien stoffschlüssig miteinander zu verbinden. Hierzu wird erfindungsgemäß das Laser-Pulver-Auftragschweißen unter Verwendung mindestens eines Grundkörpers durchgeführt, wobei während des Laser-Pulver-Auftragschweißens der Materialaufbau durch das Pulvermaterial derart erfolgt, dass der oder jeder Grundkörper vom aufgeschweißten Pulvermaterial zumindest abschnittsweise umschlossen wird.

Wie bereits mehrfach erwähnt, eignet sich das erfindungsgemäße Verfahren zur Herstellung von Schaufelsegmenten. So können zum Beispiel auch Befestigungselemente oder Gehäuseabschnitte für Gasturbinen mithilfe des erfindungsgemäßen Verfahrens hergestellt werden. Die Schaufelsegmente können mit und ohne Deckband ausgeführt sein mindestens zwei Schaufeln und umfassen.

An dieser Stelle sei abschließend darauf hingewiesen, dass die Details des Laser-Pulver-Auftragschweißens dem hier angesprochenen Fachmann geläufig sind, In aller Kürze sei nur darauf hingewiesen, dass beim Laser-Pulver-Auftragschweißen das Pulvermaterial aus einer Pulverkanone insbesondere auf den Grundkörper aufgespritzt wird und dass ein Laserstrahl das Pulvermaterial erwärmt, so dass das Pulvermaterial mit dem Grundkörper verbunden bzw. auftragsverschweißt wird.

## Patentansprüche

1. Verfahren zur Herstellung und/oder Reparatur von Bauteilen für Gasturbinen, insbesondere für Flugtriebwerke, durch Laser-Pulver-Auftragschweißen, wobei das Laser-Pulver-Auftragschweißen unter Verwendung mindestens eines Grundköpers erfolgt, und wobei während des Laser-Pulver-Auftragschweißens der Materialaufbau durch ein Pulvermaterial derart erfolgt, dass der oder jeder Grundkörper vom aufgeschweißten Pulvermaterial zumindest abschnittsweise umschlossen wird, **dadurch gekennzeichnet, dass** ein mindestens zwei Schaufel umfassendes Schaufelsegment (16) hergestellt wird, wobei der mindestens eine Grundkörper aus geschmiedetem, gegossenem oder pulvermetallurgisch hergestelltem Material beim Laser-Pulver-Auftragschweißen vom aufgeschweißten Pulvermaterial umschlossen wird.

2. Verfahren nach Anspruch 1, **dadurch gekennzeichnet, dass** der wenigstens eine Grundkörper als segmentförmiges Innendeckband (18) und/oder Außendeckband (19) ausgebildet ist, wobei Leitschaufeln beim Laser-Pulver-Auftragschweißen auf dem Innendeckband und /oder Außendeckband aufgebaut werden.

## Claims

1. Method for the production and/or repair of components for gas turbines, in particular for aircraft engines, by means of laser-powder build-up welding, wherein the laser-powder build-up welding is effected with use of at least one base body, and wherein during the laser-powder build-up welding the material build-up by means of a powder material is effected in such a way that the or each base body is enclosed at least in sections by the welded-on powder material, **characterised in that** a blade segment (16) comprising at least two blades is produced, wherein the at least one base body of forged material, cast material or material produced by powder metallurgy is enclosed by the welded-on powder material during the laser-powder build-up welding.

2. Method according to claim 1, **characterised in that** the at least one base body is formed as a segment-shaped inner shroud band (18) and/or outer shroud band (19), wherein guide blades are built up on the inner shroud band and/or outer shroud band during the laser-powder build-up welding.

## Revendications

1. Procédé pour fabriquer et/ou réparer des pièces de turbines à gaz, en particulier de groupes motopropulseurs d'aéronef, par soudage par rechargement à poudre au laser, dans lequel le soudage par rechargement à poudre au laser est effectué avec utilisation d'au moins un corps de base, et dans lequel l'accumulation de matière pendant le soudage par rechargement à poudre au laser est effectuée par une matière pulvérulente, de telle manière que le ou chaque corps de base soit enveloppé au moins par parties de matière pulvérulente déposée par soudage par rechargement, **caractérisé en ce que** l'on fabrique un segment d'aubes (16) comprenant au moins deux aubes, dans lequel ledit au moins un corps de base est enveloppé de matière forgée, coulée ou produite par la métallurgie des poudres lors du soudage par rechargement à poudre au laser de la matière pulvérulente déposée par soudage.

2. Procédé selon la revendication 1, **caractérisé en ce que** ledit au moins un corps de base est réalisé sous la forme d'un anneau de renforcement intérieur (18) et/ou d'un anneau de renforcement extérieur (19), en forme de segment, dans lequel on construit des aubes directrices sur l'anneau de renforcement intérieur et/ou l'anneau de renforcement extérieur lors du soudage par rechargement à poudre au laser.
